# EUROPÄISCHE PATENTANMELDUNG

(11) **EP 3 474 220 A1**
(43) Veröffentlichungstag der Anmeldung: **24.04.2019**
(21) Anmeldenummer: 17197746.5
(22) Anmeldetag: 23.10.2017
(51) Int. Cl.: G06Q 50/30, G07B 15/02, G06Q 20/14

(54) **VERFAHREN ZUR ERFASSUNG EINER GEBÜHRENPFLICHTIGEN TRANSPORTLEISTUNG FÜR EINEN PASSAGIER IN EINEM VERKEHRSMITTEL**

(71) Anmelder: Siemens Schweiz AG, 8047 Zürich (CH); Siemens Aktiengesellschaft, 80333 München (DE)
(72) Erfinder: GLÄNZER, Martin, 85579 Neubiberg (DE); WALSER, Christoph, 8006 Zürich (CH)
(74) Vertreter: Maier, Daniel Oliver

(57) **Zusammenfassung**

Erfindungsgemäss ist ein Verfahren zur Erfassung einer gebührenpflichtigen Transportleistung für einen Passagier (4, 6, 8) in einem Verkehrsmittel (2) vorgesehen, wobei der Umfang der gebührenpflichtigen Leistung durch einen erstmaligen Erfassungsort und optional eine erstmalige Erfassungszeit und einen letztmaligen Erfassungsort und optional eine letztmalige Erfassungszeit bestimmt wird, umfassend die folgenden Verfahrensschritte:
a) Registrieren der Anwesenheit des Passagiers (4, 6, 8) in dem Verkehrsmittel (2) anhand einer Erfassung eines von ihm getragenen elektronischen Tickets (10, 12, 14) in dem Verkehrsmittel (2), wobei ein drahtloser Datenaustausch (32, 34, 36) in dem Verkehrsmittel (2) mit dem elektronischen Ticket (10, 12, 14) mittels Bluetooth Low Energy (BLE) erfolgt, und wobei sich das elektronische Ticket (10, 12, 14) zunächst an einem ersten BLE-Transponder (22) bekanntmacht;
b) Weitergeben des bekanntgemachten elektronischen Tickets (10, 12, 14) von dem ersten BLE-Transponder (22) an einen zweiten BLE-Transponder (24 bis 30);
c) Aufbauen einer bidirektionalen Kommunikation zwischen dem zweiten BLE-Transponder (24 bis 30) und Austauschen von Daten zur Erfassung der Präsenz des elektronischen Tickets (10, 12, 14);
d) Werten eines dauerhaften Verlusts der bidirektionalen Kommunikation als Abschluss der Präsenz des elektronischen Tickets (10, 12, 14); und
e) Übergeben der aus der birektionalen Kommunikation extrahierten Daten zur erfassten Präsenz des elektronischen Tickets (10, 12, 14) an ein Nachbearbeitungssystem.

## Beschreibung

Die vorliegende Erfindung bezieht sich auf ein Verfahren Verfahren zur Erfassung einer gebührenpflichtigen Transportleistung für einen Passagier in einem Verkehrsmittel.

Bei der Erfassung von gebührenpflichtigen Leistungen geht es in der Regel um die Erfassung von Transportleistungen im öffentlichen Personenverkehr Nah- und/oder Fernverkehr oder in Freizeiteinrichtungen, wie z.B. Skigebiete, Fun-Parks. Gebührenpflichtige Leistungen können aber auch der Besuch von Kunstausstellungen, der Aufenthalt auf einem Event-Gelände oder einer Bibliothek oder ähnlichem sein. An dieser Stelle ist die Transportleistung immer Sinne einer Bereitstellung eines Museumsweges oder der Bereitstellung von Fahrgeschäften oder ähnlichem zu verstehen. An die Stelle des Verkehrsmittels tritt bei einer Bibliothek oder eines Museums dann die bereitgestellten Exponate, die entlang der vorgesehenen Wege von dem Besucher selbsttätig abgelaufen werden können.

Zunehmend versuchen die Betreiber dieser Einrichtungem im Zuge von E-Ticketing-Anwendungen den Komfort für den Teilnehmenden zu erhöhen und selbst einerseits Kosten für die Vergebührung der in Anspruch genommenen Leistungen reduzieren und andererseits Informationen über die Belegung ihrer Anlagen/Fahrzeuge zur Verbesserung der logistischen Prozesse in ihren eigenen Betriebsabläufen gewinnen zu können.

Zur Bereitstellung von E-Ticketing-Anwendungen sind zahlreiche Lösungen bekannt und im Einsatz. Grundsätzlich wird bei diesen Anwendungen zwischen Be-In-Be-Out-Systemen (BiBo) und Check-In-Check-Out-Systemen (CiCo)oder Mischformen derselben unterschieden. Während der Benutzer bei BiBo-Systemen automatisch durch das Vorhandensein eines elektronischen Transponders erfasst wird, ist bei CiCo-Systemen die Mitwirkung des Benutzers erforderlich. Im öffentlichen Personenverkehr muss der Benutzer beispielsweise seinen Ein- und Aussteigeort und -zeitpunkt durch eine aktive Betätigung, beispielsweise mittels einer Applikation auf einem Smartphone oder durch die Identifikation einer Chipkarte an einem Zugangs- und Ausgangsgate, festlegen. Im ersten Fall setzt dies voraus, dass das Smartphone über eine hinreichende Ladungsreserve verfügt, damit der Benutzer seinen besonders für die Festlegung des Fahrpreises relevanten Ausstieg aus dem Verkehrsmittel quittieren kann. Im zweiten Fall setzt dies voraus, dass der Benutzer die Chipkarte mitführt um sie an dem Zugangs- und dem Ausgangsgate erfassen zu können.

Für den Benutzer am komfortabelsten sind die sogenannten BiBo-Systeme. Hier genügt es, wenn der Benutzer ein elektronisches Ticket mit sich führt, welches dann automatisch von einem Fahrzeug erfasst wird. Aufgrund der bestimmbaren Präsenz des elektronischen Tickets in dem Fahrzeug kann so eine entsprechende Abrechnung der tatsächlich in Anspruch genommenen gebührenpflichtigen Leistung vorgenommen werden. Dieses Verfahren hat sehr viele Vorteile gegenüber CiCo-Systemen, weil es keine Erfassungspunkte gibt, an denen sich Warteschlangen bilden können. Weiter kann der Benutzer nicht vergessen, ein Ticket zu kaufen, vorausgesetzt, dass er sein elektronisches Ticket mitführt. Ausserdem muss der Benutzer das vorherrschende Tarifsystem nicht kennen, um das für seinen konkreten Anwendungsfall optimale Ticket lösen zu können.

Eine mögliche Lösung für ein elektronisches Ticket sieht vor, dieses als spezielle Karte auszuführen. Die Benutzer wünschen aber in der Regel nicht noch eine weitere Karte mit sich führen zu müssen. Auch die Erbringer der gebührenpflichtigen Leistung, hier in der Regel die Verkehrsbetriebe selbst, sind nicht daran interessiert, eine dezidierte Hardware zur Verfügung zu stellen. Deshalb ist es wünschenswert, wenn auch Smartphones als elektronisches Ticket genutzt werden könnten. Zur Erfassung der Anwesenheit des Benutzers muss dann eine Kommunikation zwischen einem Fahrzeugsystem und dem Smartphone aufgebaut werden, um eine sichere Erfassung und damit später eine sichere Transaktion gewährleisten zu können.

Für eine sichere Transaktion müssen birektional Daten ausgetauscht werden. Als Schnittstellen in Smartphones bieten sich WLAN, Bluetooth, BLE (Bluetooth Low Energy) oder NFC an. Da WLAN oft für andere Zwecke verwendet wird, beispielsweise um einem Laptop einen Internet-Zugang zur Verfügung zu stellen, ist WLAN nur bedingt für die Zwecke der Teilnehmererfassung geeignet. Bluetooth weist einen hohen Energiebedarf auf und bedarf einer teilweise langen Anmeldephase, was für eine Erfassung von vielen Benutzern in kurzer Zeit, so wie dies regelmässig bei vielen Zustiegen nach einer Haltstelle bis zum Erreichen der nächsten Haltestelle im öffentlichen Nahverkehr vorkommt, auch nur unzulänglich geeignet ist. NFC (Near Field Communication) hat nur eine sehr begrenzte Kommunikationsreichweite und wird zudem nicht von allen Smartphone-Herstellern in ihre Geräte verbaut.

BLE hingegen eignet sich prinzipiell für eine Umsetzung eines BiBo-Systems. Die Reichweite ist ausreichend gross und der Energieverbrauch vergleichsweise niedrig. Leider spricht der Verwendung von BLE entgegen, dass auch hier eine grosse Anzahl von Benutzern in sehr kurzer Zeit zu erfassen ist. Zwar ist die theoretisch mögliche Teilnehmerzahl in einem BLE-Netzwerk gross genug bemessen, aber die hierfür verfügbaren Stacks bieten meist nur eine sehr begrenzte Anzahl an gleichzeitigen Verbindungen an, was ebenfalls einer Verwendung in einem BiBo-System entgegen spricht.

Der vorliegenden Erfindung liegt daher die Aufgabe zugrunde, ein Verfahren zur Erfassung einer gebührenpflichtigen Transportleistung für einen Passagier in einem Verkehrsmittel anzugeben, bei dem der Installationsaufwand an Hardware fahrzeugseitig und der Aufwand auf Seiten des Passagiers klein ist und gleichzeitig eine grosse Anzahl von Passagieren in einer hinlänglich kurzen Zeitperiode sicher erfasst werden kann.

Diese Aufgabe wird erfindungsgemäss durch ein Verfahren zur Erfassung einer gebührenpflichtigen Transportleistung für einen Passagier in einem Verkehrsmittel gelöst, wobei der Umfang der gebührenpflichtigen Leistung durch einen erstmaligen Erfassungsort und optional eine erstmalige Erfassungszeit und einen letztmaligen Erfassungsort und optional eine letztmalige Erfassungszeit bestimmt wird, umfassend die folgenden Verfahrensschritte:
a) Registrieren der Anwesenheit des Passagiers im Verkehrsmittel anhand einer Erfassung eines von ihm getragenen elektronischen Tickets im Verkehrsmittel, wobei ein drahtloser Datenaustausch im Verkehrsmittels mit dem elektronischen Ticket mittels Bluetooth Low Energy (BLE) erfolgt, und wobei sich das elektronische Ticket zunächst an einem ersten BLE-Transponder bekanntmacht;
b) Weitergeben des bekanntgemachten elektronischen Tickets vm ersten BLE-Transponder an einen zweiten BLE-Transponder;
c) Aufbauen einer bidirektionalen Kommunikation zwischen dem zweiten BLE-Transponder und dem elektronischen Ticket und Austauschen von Daten zur Erfassung der Präsenz des elektronischen Tickets;
d) Werten eines dauerhaften Verlusts der bidirektionalen Kommunikation als Abschluss der Präsenz des elektronischen Tickets; und
e) Übergeben der aus der birektionalen Kommunikation extrahierten Daten zur erfassten Präsenz des elektronischen Tickets an ein Nachbearbeitungssystem.

Auf diese Weise ist es möglich, dass mit der energetisch vorteilhaften BLE-Kommunikation genügend viele elektronische Tickets in kurzer Zeit erfasst werden können und mit ihnen eine bidirektionale Kommunikation zum Datenaustausch aufgebaut werden kann. Zugleich ist der Installationsaufwand fahrzeugseitig gering und entfällt benutzerseitig ganz, weil Smartphones die Kommunikation nach BLE unterstützen. Da die aktuell auf den BLE Chips eingesetzten Stacks meist nur eine geringe Anzahl an Nutzern gleichzeitig erlauben, ist momentan angedacht, die bidirektionale Verbindung nach einer erfolgreichen Erfassung wieder zu beenden um mit dem nächsten Teilnehmer zu kommunizieren. Daher kann es also auch sein, dass der Nutzer aussteigt, wenn keine bidirektionale Verbindung mehr aufgebaut ist. Erst falls der BLE Transponder in diesem Fall erneut versuchen sollte eine bidirektionale Kommunikation aufzubauen und dies natürlich aufgrund der Abwesenheit des Nutzers nun nicht mehr möglich sein wird, wird im Sinne des Anspruchswortlauts von einem dauerhaften Verlust der bidirektionalen Kommunikation gesprochen. Von einem dauerhaften Verlust der bidirektionalen Kommunikation kann auch gesprochen werden, wenn der BLE-Transponder von einem elektronischen Ticket in Folge seiner ausstiegsbedingten Abwesenheit keine Daten zur Bekanntmachung des elektronischen Tickets mehr empfängt und dieses elektronischen Ticket damit gar nicht mehr zum Aufbau der bidirektionalen Kommunikation an den weiteren BLE-Transponder weitergemeldet wird.

In einer vorteilhaften Weitergestaltung der vorliegenden Erfindung kann es vorgesehen sein, dass das Nachbearbeitungssystem die vom Teilnehmer in Anspruch genommene gebührenpflichtige Transportleistung anhand der extrahierten Daten strecken- und/oder zeitbezogen aus dem erstmaligen Erfassungsort und dem letztmaligen Erfassungsort rekonstruiert und entsprechend einen Preis für die in Anspruch genommene gebührenpflichtige Transportleistung bestimmt. Dabei kann im Nachbearbeitungssystem eine Rekonstruktion der tatsächlich gefahrenen Strecke auf verschiedene Weise vorgenommen werden. Einerseits können der erstmalige und der letztmalige Erfassungort aus der Zeitinformation zur Präsenz des elektronischen Tickets im Verkehrsmittel mit den Daten eines Leitsystems verknüpft werden, das genaue Kenntnis über den dynamischen Aufenthaltsort des Verkehrsmittels hatte. Andererseits kann es aber auch direkt in Verbindung mit einem Fahrzeugrechner möglich sein, dass dem Zeitpunkt der erstmaligen und der letztmaligen Erfassung des elektronischen Tickets auf dem Verkehrsmittel direkt aus dem Fahrzeugrechner der Aufenthaltsort des Verkehrsmittels zu diesen Zeitpunkten zugewiesen wird. Anschliessend kann aus der so ermittelten zurückgelegten Strecke der zugehörige Fahrpreis bestimmt und zur Verrechnung freigegeben werden.

Bei dem um die Jahrtausendwende in der Schweiz erprobten BiBo-System EasyRide war es so, dass an jeder Fahrzeugtür ein Wecksender vorhanden sein musste, um das elektronische Ticket aufgrund der bei der vorliegenden Scheckkartengrösse des elektronischen Tickets nur sehr begrenzt zur Verfügung stehenden elektrischen Energie beim Einsteigen zu wecken und für eine spätere bidirektionale Kommunikation vorzubereiten. Diese Installation und Ausgestaltung des elektronischen Tickets kann komplett eliminiert werden, wenn die elektronischen Tickets zur ihrer Bekanntmachung BLE Advertisement Pakete aussenden. Eine derartige Aussendung dieser Advertisement Pakete ist für BLE protokoll-seitig definiert und erfordert damit seitens des ersten BLE-Transponders nur, dass dieser für den Empfang und Administration der eingegangenen BLE Advertisement Pakete ertüchtigt ist. Aus diesem Grunde ist es daher sinnvoll, wenn der erste BLE-Transponder die BLE Advertisement Pakete empfängt und eine entsprechende Liste der den BLE Advertisement Paketen zugrundeliegenden elektronischen Tickets führt. Somit erkennt der ersten BLE-Transponder auch, wenn sich ein elektronisches Ticket innerhalb der Reichweite der Advertisment Pakete bereits bekanntgemacht hat.

In einer weiteren Ausgestaltung der vorliegenden Erfindung kann in Abhängigkeit von der erwarteten Anzahl von kurzfristig zu erfassenden elektronischen Tickets mindestens ein weiterer BLE-Transponder vorgesehen sein, wobei der erste BLE-Transponder die ihm bekanntgemachten elektronischen Tickets auslastungsbezogen auf den zweiten und den mindestens einen weiteren BLE-Transponder verteilt. Unter der Annahme von 10 pro BLE-Transponder etablierbaren bidirektionale Kommunikationsmöglichkeiten und eine angenommenen Anzahl von 30 gleichzeitig anwesenden Benutzern, die gleichzeitig erfasst werden sollen, würden neben dem ersten BLE-Transponder, an dem sich die elektronischen Tickets bekanntmachen, weitereBLE-Transponder benötigt, um diese 30 Benutzer gleichmässig auf die BLE-Transponder zu verteilen.

In Ergänzung oder auch alternativ zu einer der vorstehend genannten vorteilhaftern Ausgestaltungen der Erfindung kann eine BLE-Ticket-Applikation auf einem mobilen Kommunikationsgerät, wie z.B. einem Smartphone, Laptop, ausgeführt werden. Der Benutzer kann dann beispielsweise den Verlauf der Erfassung verfolgen und über die tatsächlich zurückgelegte Fahrstrecke informiert werden. Ebenso kann auf diesem Wege auch der, der Fahrstrecke vom Nachbearbeitungssystem zugewiesene, Fahrpreis angegeben werden.

Zur sicheren Erfassung der Präsenz des elektronischen Tickets kann es vorgesehen sein, dass die bidirektionale Kommunikation zwischen dem zweiten BLE-Transponder und dem elektronischen Ticket auf einer von dem zweiten BLE-Transponder oder einem der weiteren BLE-Transponder vergebenen Frequenz erfolgt.

Weitere vorteilhafte Ausgestaltungen der vorliegenden Erfindung sind den übrigen Unteransprüchen zu entnehmen.

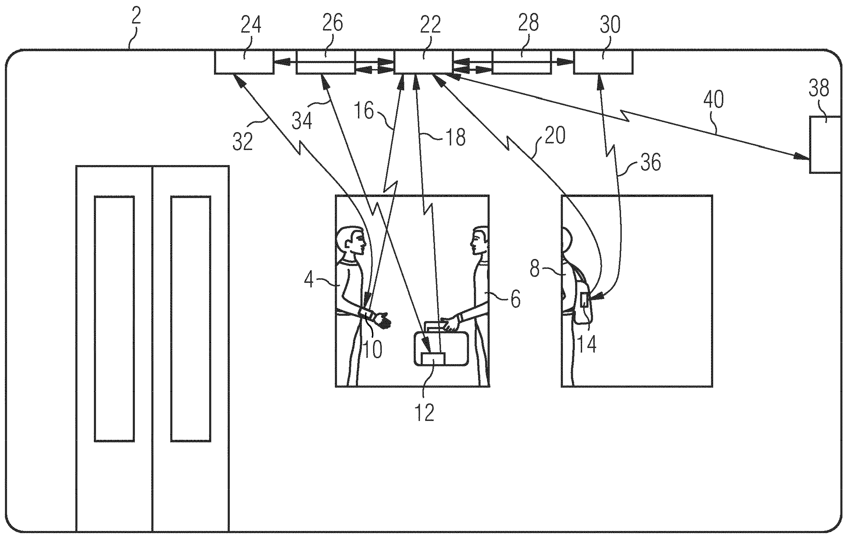

Vorteilhafte Ausführungsbeispiele der vorliegenden Erfindung werden nachfolgend mit Bezug zu den anhängenden Zeichnungen näher erläutert. Dabei zeigt die Figur schematisch den Ablauf des Erfassungsverfahrens am Beispiel eines Strassenbahnwagens 2 für drei Fahrgäste 4, 6, 8, die an einer unmittelbar vorangehenden Station in den Strassenbahnwagen 2 eingestiegen sind. Jeder dieser Fahrgäste 4, 6, 8 führt ein Smartphone 10, 12, 14 mit sich, auf dem eine entsprechende BLE-Ticketapplikation ausgeführt wird. Die Smartphones 10, 12, 14 senden auf dem BLE-Protokoll in zyklischem Abstand Advertisement Pakete aus, die besonders eine eindeutige Zuordenbarkeit des Ursprungsgeräts, hier die Smartphones 10, 12, 14, ermöglichen. Diese Aussendung ist hier durch Pfeile 16, 18, 20 symbolisiert. Zum Empfang dieser Advertisement-Pakete ist ein erster BLE-Transponder 22 vorgesehen, der die in der Reichweite der BLE-Kommunikation befindlichen Smartphones 10, 12, 14 ebenfalls periodisch erfasst.

Somit ist der erste BLE-Transponder 22 innerhalb weniger Sekunden in der Lage selbst eine viel grössere Anzahl von Smartphones als hier beispielhaft gezeigt zu erfassen und eine Liste der erfassten Smartphones zu führen. Auf diese Weise haben sich die Smartphones 10, 12, 14 sozusagen beim ersten BLE-Transponder 22 bekannt gemacht. Für den Aufbau einer bidirektionalen Kommunikation mit den Smartphones 10, 12, 14 zu deren nachhaltiger Erfassung sind vorliegend eine Anzahl von vier weiteren BLE-Transpondern 24 bis 30 vorgesehen.

Soll die Anwesenheit der Smartphones 10, 12, 14 in ihrer Funktion als elektronisches Ticket nur vorgenommen werden (beispielsweise nach der Abfahrt des Strassenbahnwagens an einer unmittelbar vorhergehenden Strassenbahnhaltestelle), arbeitet der erste BLE-Transponder 22 nun kooperativ mit dem vier anderen BLE-Transpondern 24 bis 30 zusammen. Der erste BLE-Transponder 22 verteilt und verwaltet die bekanntgemachten elektronischen Tickets zur Erzielung einer gleichmässigen Verteilung der zur Verfügung stehenden gleichzeitigen Kommunikationskanäle (z.B. 10 Kommunikationskanäle pro BLE-Transponder 24 bis 30). Bei Berücksichtigung der weiteren im Strassenbahnwagen 2 befindlichen, aber hier nicht weiter dargestellten Fahrgäste verteilt der erste BLE-Transponder 22 das Smartphone 10 auf den BLE-Transponder 24, das zweite Smartphone 12 auf den BLE-Transponder 26 und das dritte Smartphone 14 auf den BLE-Transponder 30. Der BLE-Transponder 28 erhält momentan kein weiteres Smartphone, weil er aktuell hier angenommen über die höchste Auslastung aller BLE-Transponder 24 bis 30 verfügt. Der Aufbau der bidirektionalen Kommunikation der Smartphones 10, 12, 14 mit den zugeordneten BLE-Transponders 24 bzw. 26 bzw. 30 ist durch Pfeile 32, 34, 36 symbolisiert, die in beide Richtungen zeigen. Ist die bidirektionale Kommunikation erfolgreich aufgebaut, erfolgt die sichere Erfassung der Smartphones 10 bis 14 an den jeweiligen BLE-Transpondern 24, 26 und 30.

Steigt nun ein Fahrgast aus dem Strassenbahnwagen aus oder begibt sich in einen anderen Wagen ausserhalb der Reichweite des ersten BLE-Transponders 22 finden zwei Effekte zeitlich eng beieinander liegend statt. Erstens fehlen dem ersten BLE-Transponder 22 die Advertisement-Pakete des mit dem Fahrgast gegangenen Smartphones und zweitens ist auch die bidirektionale Kommunikation abgebrochen bzw. kann nicht wieder aufgebaut werden. Im erstgenannten Fall des Aussteigens wird auch die bidirektionale Kommunikation nicht wieder in einem anderen Wagen der Strassenbahn aufgebaut, während bei einem Wagenwechsel die Advertisement Pakete an einem anderen ersten BLE-Transponder des entsprechend anderen Wagens empfangen werden. Nach Ausbleiben der Advertisement Pakete und Scheitern des Aufbaus der bidirektionalen Kommunikation werden die erfassten auf das Smartphone bezogenen Daten an einen Fahrzeugrechner 38 übermittelt, was durch einen Pfeil 40 symbolisiert ist. Die im Fahrzeugrechner gespeicherten Daten werden beispielsweise immer beim Erreichen einer Endstation an ein hier nicht weiter dargestelltes Nachbearbeitungssystem übertragen. Hierzu eignet sich dann beispielsweise eine WLAN-Verbindung.

Das Nachbearbeitungssystem rekonstruiert die von dem Teilnehmer in Anspruch genommene gebührenpflichtige Transportleistung anhand der extrahierten Daten strecken-und/oder zeitbezogen aus dem erstmaligen Erfassungsort und dem letztmaligen Erfassungsort und bestimmt entsprechend einen Preis für die in Anspruch genommene gebührenpflichtige Transportleistung. Dabei kann im Nachbearbeitungssystem eine Rekonstruktion der tatsächlich gefahrenen Strecke auf verschiedene Weise vorgenommen werden. Einerseits können der erstmalige und der letztmalige Erfassungort aus der Zeitinformation zur Präsenz des elektronischen Ticket in dem Verkehrsmittel mit den Daten eines Leitsystems verknüpft werden, das genaue Kenntnis über den dynamischen Aufenthaltsort des Strassenbahnwagens 2 (wahrscheinlich wird einfach der Aufenthaltsort des ganzen Strassenbahnzuges herangezogen) hatte. Andererseits kann es aber auch direkt in Verbindung mit einem Fahrzeugrechner möglich sein, dass dem Zeitpunkt der erstmaligen und der letztmaligen Erfassung des elektronischen Tickets auf dem Verkehrsmittel direkt aus dem Fahrzeugrechner der Aufenthaltsort des Strassenbahnzuges zu diesen Zeitpunkten zugewiesen wird. Anschliessend kann aus der so ermittelten zurückgelegten Strecke der zugehörige Fahrpreis bestimmt und zur Verrechnung freigegeben werden.

Auf diese Weise ist es nun möglich geworden, dass durch die geschickte Kombination und Kooperation der BLE-Transponder 22 bis 30 sichere Transaktionen mittels BLE von vielen Fahrgästen in kurzer Zeit durchgeführt werden können. Hierbei beträgt die zur Verfügung stehende kurze Zeit in etwa die kürzeste Zeitdauer, die das Verkehrsmittel zwischen zwei möglichen Stationen des Verkehrsnetzes zum Zurücklegen eben dieser Strecke benötigt. Somit ist es einfach möglich selbst 250 neue Fahrgäste innerhalb weniger Sekunden in einem Strassenbahnzug oder ähnlichem ÖV-Fahrzeug zu erfassen und eine sichere Transaktion durchzuführen. Die Verwendung von BLE hat auch den Vorteil, dass der Betreiber des Verkehrnetzes eine eigene BLE-Hardware (eigene BLE-Tickets) herausgeben kann, aber selbstverständlich auch auf die grosse Verbreitung von BLE-fähigen Smartphones und anderer elektronischer Kommunikationsgeräte zurückgreifen kann (ohne hier fahrgastseitig eine eigene Hardware zu entwickeln). Somit muss im Verkehrsmittel selbst nur ein System installiert werden, während verschiedene Ticketausgestaltungen verwendet werden können: für Smartphone-Besitzer, die keine zusätzliche Karte wünschen, die Smartphone-Lösung und für diejenigen, die lieber ein gesondertes Ticket wünschen, eine eigenständige Hardware für das elektronische Ticket, beispielsweise im wesentlichen in Form und Grösse einer Kredit- oder Bankkarte.

Das vorstehend genannte Ausführungsbeispiel bezieht sich hier auf eine Anwendung im öffentlichen Nah- und Fernverkehr. Grundsätzlich ist das Verfahren aber auch in anderen anwesenheitsbezogenen Systemen, wie Freizeitparks, Skiliftanlagen, Museen, anwendbar.

## Patentansprüche

1. Verfahren zur Erfassung einer gebührenpflichtigen Transportleistung für einen Passagier (4, 6, 8) in einem Verkehrsmittel (2), wobei der Umfang der gebührenpflichtigen Leistung durch einen erstmaligen Erfassungsort und optional eine erstmalige Erfassungszeit und einen letztmaligen Erfassungsort und optional eine letztmalige Erfassungszeit bestimmt wird, umfassend die folgenden Verfahrensschritte:
a) Registrieren der Anwesenheit des Passagiers (4, 6, 8) in dem Verkehrsmittel (2) anhand einer Erfassung eines von ihm getragenen elektronischen Tickets (10, 12, 14) in dem Verkehrsmittel (2), wobei ein drahtloser Datenaustausch (32, 34, 36) in dem Verkehrsmittel (2) mit dem elektronischen Ticket (10, 12, 14) mittels Bluetooth Low Energy (BLE) erfolgt, und wobei sich das elektronische Ticket (10, 12, 14) zunächst an einem ersten BLE-Transponder (22) bekanntmacht;
b) Weitergeben des bekanntgemachten elektronischen Tickets (10, 12, 14) von dem ersten BLE-Transponder (22) an einen zweiten BLE-Transponder (24 bis 30);
c) Aufbauen einer bidirektionalen Kommunikation zwischen dem zweiten BLE-Transponder (24 bis 30) und Austauschen von Daten zur Erfassung der Präsenz des elektronischen Tickets (10, 12, 14);
d) Werten eines dauerhaften Verlusts der bidirektionalen Kommunikation als Abschluss der Präsenz des elektronischen Tickets (10, 12, 14); und
e) Übergeben der aus der birektionalen Kommunikation extrahierten Daten zur erfassten Präsenz des elektronischen Tickets (10, 12, 14) an ein Nachbearbeitungssystem.

2. Verfahren nach Anspruch 1,
**dadurch gekennzeichnet, dass**
das Nachbearbeitungssystem die von dem Passagier in Anspruch genommene gebührenpflichtige Transportleistung anhand der extrahierten Daten strecken- und/oder zeitbezogen aus dem erstmaligen Erfassungsort und dem letztmaligen Erfassungsort rekonstruiert und entsprechend einen Preis für die in Anspruch genommene gebührenpflichtige Transportleistung bestimmt.

3. Verfahren nach Anspruch 1 oder 2,
**dadurch gekennzeichnet, dass**
die elektronischen Tickets (10, 12, 14) zur ihrer Bekanntmachung BLE Advertisement Pakete (16, 18, 20) aussenden.

4. Verfahren nach Anspruch 3,
**dadurch gekennzeichnet, dass**
der erste BLE-Transponder (22) die BLE Advertisement Pakete (16, 18, 20) empfängt und eine entsprechende Liste der den BLE Advertisement Paketen (16, 18, 20) zugrundeliegenden elektronischen Tickets (10, 12, 14) führt.

5. Verfahren nach Anspruch 4,
**dadurch gekennzeichnet, dass**
mindestens ein weiterer BLE-Transponder (24 bis 30) vorgesehen ist, wobei der erste BLE-Transponder (22) die ihm bekanntgemachten elektronischen Tickets (10, 12, 14) auslastungsbezogen auf die vorhandenen BLE-Transponder (24 bis 30) verteilt.

6. Verfahren nach einem der vorangegangenen Ansprüche,
**dadurch gekennzeichnet, dass**
eine BLE-Ticket-Applikation auf einem mobilen Kommunikationsgerät (10, 12, 14) ausgeführt wird.

7. Verfahren nach einem der vorangehenden Ansprüche,
**dadurch gekennzeichnet, dass**
die bidirektionale Kommunikation zwischen dem zweiten BLE-Transponder (24 bis 30) und dem elektronischen Ticket (10, 12, 14) auf einer von dem zweiten BLE-Transponder (24 bis 30) oder einem der weiteren BLE-Transponder (24 bis 30) vergebenen Frequenz erfolgt.
